# EUROPÄISCHE PATENTANMELDUNG

(11) **EP 0 938 021 A2**
(43) Veröffentlichungstag der Anmeldung: **25.08.1999**
(21) Anmeldenummer: 99890026.0
(22) Anmeldetag: 28.01.1999
(51) Int. Cl.: G03B 17/26

(54) **Verfahren zum Auf- und Abwickeln eines Informationsträgers, insbesondere eines Filmes**

(30) Priorität: 20.02.1998 AT 30498
(71) Anmelder: Bauer, Fritz, A-3002 Purkersdorf (AT)
(72) Erfinder: Bauer, Fritz, A-3002 Purkersdorf (AT)
(74) Vertreter: Gibler, Ferdinand, Dipl.-Ing. Dr. techn.

(57) **Zusammenfassung**

Verfahren zum Abwickeln eines Informationsträgers, insbesondere eines Filmes, von einem Wickelkern und zum Aufwickeln desselben Informationsträgers auf den jeweils anderen Wickelkern innerhalb des Gehäuses einer Kassette, z.B. einer Filmkassette, wobei die Wickelkerne auf parallelen, drehbar gelagerten Wickelkernträgern gehalten sind, und die um ihre Achsen rotierenden Wickelkernträger (3, 4) der beiden Wickelkerne (9, 10) während des Wickelvorganges relativ zum Gehäuse (6) entlang einer vorbestimmbaren, gekrümmten Bahn (37) jeweils in Richtung zum abzuwickelnden Wickelkern (9, 10) bewegt werden.

## Beschreibung

Die Erfindung betrifft ein Verfahren zum Abwickeln eines Informationsträgers, insbesondere eines Filmes, von einem Wickelkern und zum Aufwickeln desselben Informationsträgers auf den jeweils anderen Wickelkern innerhalb des Gehäuses einer Kassette, z.B. einer Filmkassette, wobei die Wickelkerne auf parallelen, drehbar gelagerten Wickelkernträgern gehalten sind.

Die Erfindung bezieht sich im besonderen auf Anwendungen in der Filmtechnik, es sind aber genauso tontechnische oder datentechnische Anwendungen des erfindungsgemäßen Prinzips möglich.

Bei bisher bekannten Verfahren dieser Art geschieht das Auf- und Abwickeln eines Informationsträgers durch das Antreiben des jeweils aufzuwickelnden Wickelkerns innerhalb der Kassette oder durch den direkten Informationsträgertransport über Transportrollen bei frei drehbaren Wickelkernen, wobei die drehbaren Wickelkernträger ortsfest innerhalb der Kassette gelagert sind.

Aufgabe der Erfindung ist es, ein Verfahren anzugeben, mit dem ein Auf- und Abwickeln des Informationsträgers auf möglichst engem Raum ausgeführt werden kann.

Erfindungsgemäß wird dies dadurch erreicht, daß die um ihre Achsen rotierenden Wickelkernträger der beiden Wickelkerne während des Wickelvorganges relativ zum Gehäuse entlang einer vorbestimmbaren, gekrümmten Bahn jeweils in Richtung zum abzuwickelnden Wickelkern bewegt werden.

Da die auf dem Abwickelkern befindliche Abwickelspule stetig in ihrem Durchmesser verringert wird, kann der dadurch frei werdende Kassettenraum genutzt werden, indem der betreffende Wickelkernträger im selben Ausmaß wie Informationsträgermaterial abgewickelt wird in den frei werdenden Raum verschoben wird. Auf der Aufwickelseite hingegen ermöglicht die Bewegung des Aufwickelkerns in Richtung des Abwickelkerns die Vergrößerung des Trägermaterialdurchmessers. Insgesamt kann so aufgrund der von den Wickelkernträgern ausgeführten Bahnbewegung der durch den Wickelvorgang sich ergebende Leerraum im Bereich einer Wickelspule innerhalb der Kassette immer der jeweils anderen Wickelspule zur Verfügung gestellt werden.

In weiterer Ausbildung der Erfindung kann vorgesehen sein, daß der Abstand zwischen den Wickelkernträgern während des Wickelvorganges konstant gehalten wird.

Dadurch können die beiden Wickelkernträger gemeinsam bewegt werden, sodaß sich die Durchführung der Bewegung entlang der gekrümmten Bahn entsprechend vereinfacht.

Gemäß einem weiteren Ausführungsbeispiel der Erfindung kann vorgesehen sein, daß die während des Wickelvorganges durchlaufene. gekrümmte Bahn der beiden Wickelkernträger durch einen Kreisbogenabschnitt gebildet wird, der in einer Ebene normal zu den Drehachsen der beiden Wickelkernträger verläuft.

Diese Form der Bahnkrümmung kann auf einfachem Wege durch eine gemeinsame Schwenkbewegung der Wickelkernträger stattfinden.

Weiters betrifft die Erfindung eine Filmkassette mit zwei in einem Gehäuse drehbar gelagerten Wickelkernträgern zur Halterung von vorzgusweise aufsteckbaren Filmwickelkernen, die in einem festen Abstand voneinander angeordnet sind und über die der Film jeweils von einem der Filmwickelkerne abwickelbar und auf den jeweils anderen aufwickelbar ist.

Die Erfindung ist auch auf andere Informationsträgerkassetten in entsprechender Weise anwendbar.

Bei professionellen Filmkameras sind die Filmkassetten in der Regel nicht Bestandteil des Kameragehäuses sondern davon unabhängige Gehäuse verschiedener Größe und Form, die wahlweise mit dem Kameragehäuse verbindbar sind. Die Filmkassette steht dabei sowohl zur Aufnahme des unbelichteten Rohfilms, welcher zur Belichtung durch das Kameragehäuse geführt wird, als auch zur Aufnahme des vom Kameragehäuse kommenden, belichteten Materials zur Verfügung. Eine solche Filmkassette enthält in der Regel zwei Wickelkernträger zur Aufnahme der Ab- und Aufwickelkerne mit der darauf befindlichen Filmspule.

Eine bekannte Ausführungsform einer Filmkassette ist die Zweiraumkassette, in welcher der Abwickelraum und der Aufwickelraum getrennt sind.

Eine weitere Entwicklungsstufe stellt die Coax-Kassette dar, in der voneinander getrennte Ab- und Aufwickelräume axial nebeneinander angeordnet sind.

Die derzeit gebräuchlichste Form ist aber die Einraum- oder Verdrängungskassette (Displacement-Kassette), welche eine geringere Baugröße aufweist, da der Achsabstand zwischen den im Kassettenkörper beabstandet angeordneten Wickelkernträgern geringer als der zweifache Filmrollendurchmesser gewählt ist. Jener freiwerdende Raum innerhalb der Kassette, der durch die jeweils sich abwickelnde Spule frei wird, wird für den steigenden Raumbedarf der sich aufwickelnden Spule unmittelbar genutzt. So ist z.B. die Aufwickelseite mit einer unverbrauchten Standardfilmrolle belegt und auf der Abwickelseite nur der Durchmesser des Wickelkernes wirksam. Im Zuge der Filmaufnahme verringert sich nun der Durchmesser der Abwickelseite und vergrößert sich der Durchmesser der Aufwickelseite. Die Kassettengröße ist aber letztlich dadurch bestimmt, daß anfänglich auf der Abwickelseite und am Ende auf der Aufwickelseite eine Standardfilmrolle Platz haben muß.

Aufgabe der Erfindung ist es, eine Filmkassette anzugeben, mit der sich eine noch weitere Verringerung des Raumbedarfes erzielen läßt.

Erfindungsgemäß wird dies dadurch erreicht, daß ein um eine Schwenkachse verschwenkbarer Schwenkträger vorgesehen ist. auf dem die drehbaren Wickelkernträger angeordnet sind.

Der die Wickelkernträger tragende Schwenkträger erlaubt während des Wickelvorganges die Ausführung einer kreisbogenförmigen Bahn der Wickelkerne innerhalb der Kassette. Durch das gemeinsame Verschwenken der Filmwickelkerne kann die sich abwickelnde Filmspule jeweils in den durch das Abwickeln entstehenden Leerraum nachgeschoben werden, während dabei der für die sich aufwickelnde Filmspule bereitstehende Leerraum vergrößert wird.

In weiterer Ausbildung der Erfindung kann vorgesehen sein, daß die Schwenkachse des Schwenkträgers parallel zu den Drehachsen der Wickelkernträger verläuft.

Weiters kann gemäß einem Ausführungsbeispiel der Erfindung vorgesehen sein, daß der Abstand der Schwenkachse zu den Drehachsen der Wickelkernträger größer als der Radius einer voll aufgewickelten Filmspule ist.

Damit kann eine die Filmbewegung nicht behindernde Lagerung der Schwenkachse in einem Teil des Gehäuses erreicht werden.

Gemäß einem weiteren Ausführungsbeispiel der Erfindung kann vorgesehen sein, daß die Schwenkachse in der Mittelebene zwischen den drehbaren Wickelkernträgern liegt.

Auf diese Weise ergibt sich eine völlig ausgeglichene Lagerung der Filmwickelkerne.

Weiters kann vorgesehen sein, daß der Schwenkträger zwei V-förmig von der Schwenkachse sich wegerstreckende, vorzugsweise gleich lange Arme umfaßt, an deren Enden die drehbaren Wickelkernträger angeordnet sind, wobei die Enden der Arme über einen Verbindungssteg verbunden sind.

Durch eine derartige Gestaltung des Schwenkträgers kann eine von der Filmauf- bzw. - abwicklung unabhängige Lagerung der Wickelkernträger erreicht werden, wobei der Schwenkträger ein relativ geringes Gewicht und aufgrund des Verbindungsstegs dennoch hohe Stabilität aufweist.

Die Schwenkbewegung selbst kann bei geeigneter Lage der Kassette auch unter Ausnutzung der Schwerkraft hervorgerufen werden, es kann dazu aber auch gemäß einer Variante der Erfindung eine Vorrichtung zur Erzeugung der Schwenkbewegung des Schwenkträgers vorgesehen sein.

Gemäß einem bevorzugten Ausführungsbeispiel der Erfindung kann vorgesehen sein, daß die Vorrichtung zur Erzeugung der Schwenkbewegung eine Schraubenfeder umfaßt, die mit ihrem einen Ende an dem Gehäuse und mit ihrem anderen Ende an einem der Trägerarme angebracht ist. Die auf diese Weise zwischen Gehäuse und Trägerarm gespannte Feder bewirkt eine entsprechende rücktreibende Kraft in Richtung auf jenen Gehäuseteil, an dem die Feder angebracht ist. Verringert sich der Durchmesser des auf der betreffenden Filmspule aufgewickelten Filmmaterials so wird der Trägerarm aufgrund der Federwirkung mit der Wickelkern-Drehachse in Richtung auf das Gehäuse geschwenkt und die sich abwickelnde Filmrolle in den in der Kassette freiwerdenden Raum nachverschoben.

Um nun einen direkten Kontakt der sich abwickelnden Filmrolle mit der Gehäusewand zu vermeiden, ist gemäß einem weiteren Ausführungsbeispiel der Erfindung vorgesehen, daß zur Distanzierung der Filmspule eine ortsfest gelagerte Abrollwalze innerhalb des Gehäuses vorgesehen ist, deren Drehachse parallel zu den Drehachsen der Wickelkernträger angeordnet ist, wobei die Abrollwalze mit dem sich auf dem gegenüberliegenden Filmwickelkern aufoder abwickelnden Film in Rollkontakt bringbar ist.

Eine besonders vorteilhafte Abrollbewegung kommt dadurch zustande, daß die gedachte Verlängerung der Schwenkbewegungskreisbahn der Wickelkernträger durch die Drehachse der Abrollwalze verläuft.

Eine weitere Ausführungsform der Erfindung kann darin bestehen, daß die Abrollwalze an ihren Enden je einen Bereich mit größerem Durchmesser und zwischen den Endbereichen einen mittleren Bereich mit kleinerem Durchmesser aufweist, wobei der mittlere Bereich sich über die effektive Filmbreite ohne Perforation erstreckt. Auf diese Weise wird ein direkter Kontakt des die Bildinformation tragenden Filmbereiches mit der Abrollwalze vermieden, da es sonst zu Beschädigungen der empfindlichen Oberfläche kommen könnte.

Um ein Ausweichen des Filmes vom Abrollbereich weg zu unterbinden, ist gemäß einem weiteren Ausführungsbeispiel der Erfindung vorgesehen, daß die Enden der Abrollwalze jeweils kegelstumpfartig erweitert sind.

Gemäß einem weiteren Ausführungsbeispiel der Erfindung kann vorgesehen sein, daß die Länge des Gehäuses ungefähr dem Durchmesser einer voll aufgewickelten Filmspule vermehrt um den Durchmesser eines Filmwickelkerns und die Breite des Gehäuses ungefähr dem Durchmesser der voll aufgewickelten Filmspule entspricht. Die sich dadurch ergebende Verkleinerung des Kassetten-Volumens verringert die Gesamtabmaße jener Filmkamera, die mit der erfindungsgemäßen Filmkassette ausgestattet wird. Die daraus entstehenden Vorteile sind mannigfaltig. Unter anderem ermöglicht dies eine bessere Einsetzbarkeit der Filmkamera bei Dreharbeiten, aber auch deren Transport und Aufbewahrung kann dadurch verbessert werden.

Eine besonders vorteilhafte Anbringung läßt sich dadurch erreichen, daß die Schwenkachse des Schwenkträgers im Bereich zwischen den Filmtransportrollen angeordnet ist. Auf diese Weise kann ein relativ großer Krümmungsradius der Schwenkbewegung verwirklicht werden, der eine bestmögliche Ausnutzung des zur Verfügung stehenden Raumes innerhalb der Kassette ermöglicht.

Schließlich kann vorgesehen sein, daß die Wickelkernträger an jeweils einem ihrer Enden auf dem Schwenkträger gelagert sind, und daß die Schwenkachse sich in entgegengesetzter Richtung zu den Wickelkernträgern vom Schwenkträger wegerstreckt.

Durch die besondere Form eines solchen Schwenkträgers kann dieser auf nur einer Seite der Wickelebene innerhalb der Kassette angeordnet werden, sodaß der Filmtransport selbst nicht behindert wird.

Nachstehend wird die Erfindung anhand des in den Zeichnungen beschriebenen Ausführungsbeispieles eingehend erläutert. Es zeigt dabei
Fig. 1 eine Draufsicht auf eine geöffnete Filmkassette nach dem Stand der Technik mit einer abgewickelten und einer aufgewickelten Filmwickelspule;
Fig.2 eine Draufsicht auf die Filmkassette nach Fig. 1 in umgekehrtem Wickelzustand;
Fig.3 eine Draufsicht auf eine weitere geöffnete Filmkassette nach dem Stand der Technik mit einer abgewickelten und einer aufgewickelten Filmwickelspule;
Fig.4 eine Draufsicht auf die Filmkassette nach Fig. 1 in umgekehrtem Wickelzustand;
Fig.5 eine Draufsicht auf eine Ausführungsform der geöffneten, erfindungsgemäßen Filmkassette mit einer abgewickelten und einer aufgewickelten Filmwickelspule;
Fig.6 eine Draufsicht auf die Filmkassette nach Fig.5 in umgekehrtem Wickelzustand und
Fig.7 eine Seitenansicht der Filmkassette nach Fig.5.

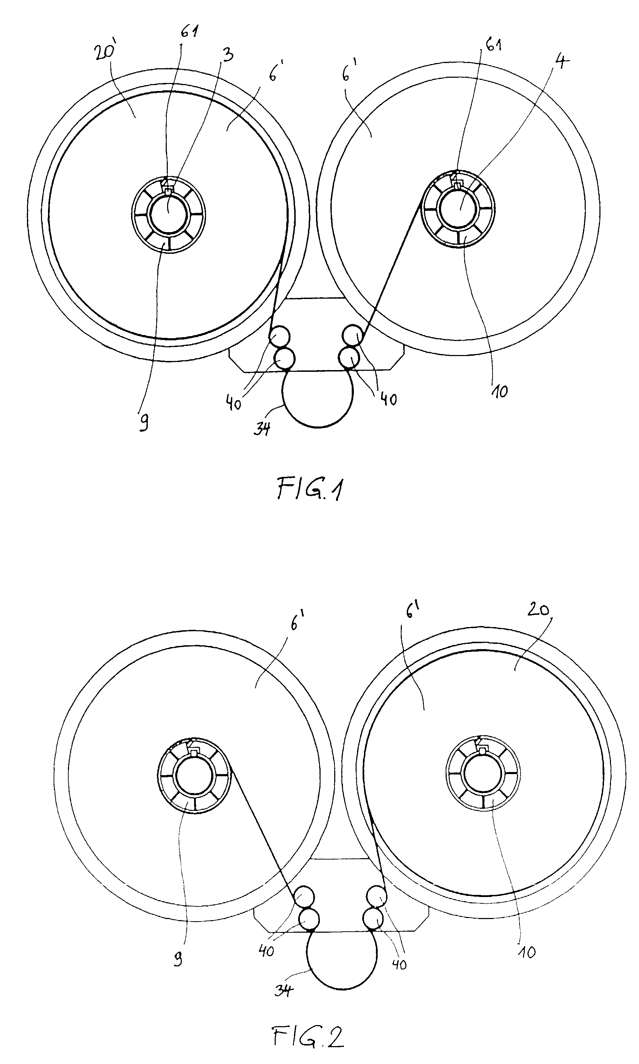

Fig.1 und 2 zeigen eine Zweiraumkassette, wie sie bereits seit langem bekannt ist. In zwei getrennten Kassetten 6' ist jeweils ein Wickelkernträger 3, 4 drehbar gelagert, auf die Wickelkerne 9, 10 aufgesteckt sind. Die Mitnehmernasen 61 bewirken eine drehfeste Verbindung von Wickelkern 9, 10 und Wickelkernträger 3, 4. Auf der linken Seite der Fig. 1 befindet sich dabei die Abwickelseite mit dem Wickelkern 9, auf dem die unbelichtete Filmspule 20' aufgewickelt ist, und auf der rechten Seite die Aufwickelseite mit dem fast leeren Wickelkern 10.

Der von der Abwickelseite kommende Film 34 wird über Transportrollen 40 von der Filmspule 20' auf den leeren Wickelkern 10 transportiert. Der nach dem Wickelvorgang und nach der in der Filmkamera erfolgten Belichtung erreichte Endzustand ist in Fig.2 abgebildet, in dem der belichtete Film auf der Filmspule 20 aufgewickelt ist. Durch Umkehr des Wickeldrehsinnes kann nach dem erneuten Filmtransport wieder der Zustand gemäß Fig.1 erreicht werden. Die zwischen den Rollen 40 angedeutete Filmschleife soll dabei den hier nicht näher beschriebenen Weg des Filmes 34 während seines Transports durch eine Filmkamera verkörpern.

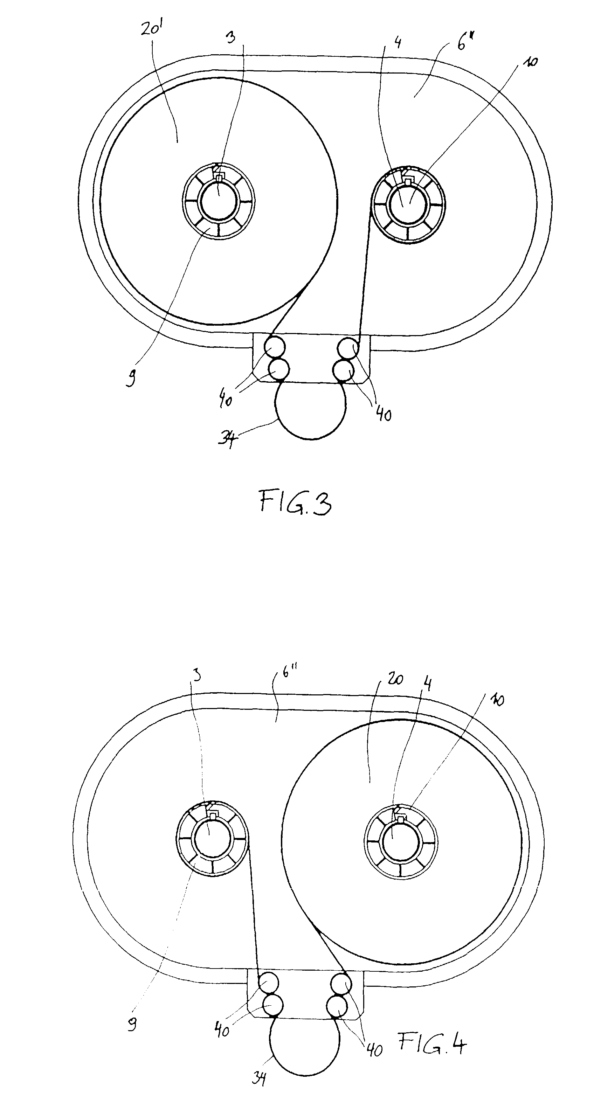

Wie in den Fig.1 und 2 zu erkennen ist, ist der von den Kassetten 6' umschlossene Raum in jedem Endzustand nur sehr schlecht genutzt, da jeweils eine Kassette in beinahe völlig leerem Zustand ist. Diese schlechte Ausnutzung herrscht bei Summierung der Hohlräume beider Kassetten in jedem Wickelzustand vor. Da Filmkassetten dieser Art relativ sperrig sind, wurde die Einraum- oder Displacement-Kassette entwickelt, wie sie in Fig. 3, 4 dargestellt ist. Dabei sind die zwei ursprünglich getrennten Kassetten 6' zu einer einzigen Kassette 6" vereinigt und die Wickelkernträger der Filmwickelkerne 9, 10 in einen engeren Abstand gerückt, wodurch der jeweils gerade ungenutzte Raum auf der Seite des abgewickelten Filmwickelkerns 9, 10 teilweise für die aufgewickelte Filmwickelspule 20, 20' beansprucht wird. Damit läßt sich insgesamt eine Reduktion des für die Filmkassette beanspruchten Raumes erzielen, wodurch diese kleiner gebaut werden kann. Dennoch verbleibt aber, wie aus Fig.3 und 4 ersichtlich, noch ein erheblicher Restraum, der innerhalb der Kassette 6" immer leer bleibt.

Um den von der Filmkassette eingeschlossenen Raum weiter zu verkleinern und damit eine weitere Verkleinerung der Außenabmessungen der Filmkassette zu ermöglichen, wird ein Verfahren zum Abwickeln eines Filmes von einem Wickelkern und zum Aufwickeln desselben Informationsträgers auf den jeweils anderen Wickelkern innerhalb einer Kassette angegeben. Dabei kann anstelle des Filmes auch jeder andere Informationsträger, wie z.B. ein Magnetband o.ä. in einer Kassette auf diese platzsparende Weise auf- bzw. abgewickelt werden.

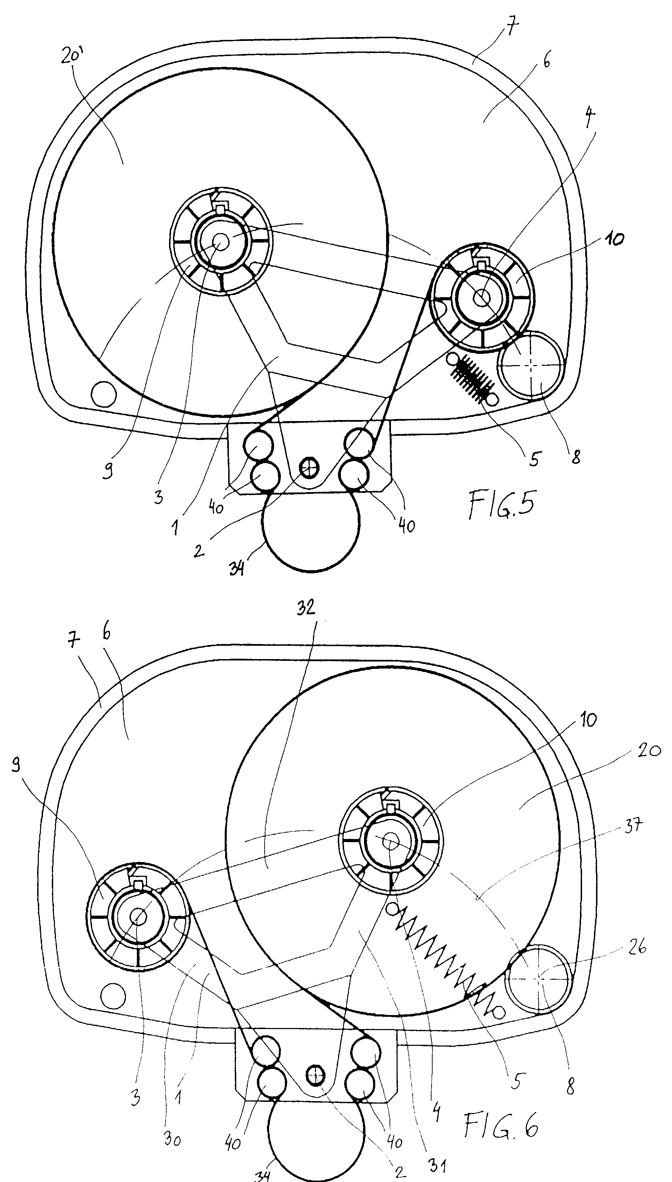

Erfindungsgemäß ist dazu vorgesehen, daß die um ihre Achsen rotierenden Wickelkernträger 3, 4 der beiden Wickelkerne 9, 10 während des Wickelvorganges relativ zum Gehäuse entlang einer vorbestimmbaren, gekrümmten Bahn 37 jeweils in Richtung zum abzuwickelnden Filmwickelkern bewegt werden. Die Bewegung entlang einer solchen gekrümmten Bahn ermöglicht es, den durch eine Filmstandardrolle vorgegebenen abgerundeten Innenraum der Kassette bestmöglichst zu nutzen. Die Standardlängen von Filmspulen betragen 120 m/400 ft und 300 m/1000 ft. Dementsprechend sind die Kassettenabmessungen zu dimensionieren. Eine mögliche Form der erfindungsgemäßen Filmkassette ist in den Fig. 5, 6 oder 7 gezeigt, diese kann aber entsprechend der gewählten Bahnbewegung und der verwendeten Standardfilmrollen angepaßt werden.

Die zwei in dem Gehäuse 6 drehbar gelagerten Wickelkernträger 3, 4 sind in einem festen Abstand voneinander angeordnet. Über diese ist der Film 34 jeweils von einem der Filmwickelkerne 9, 10 abwickelbar und auf den jeweils anderen aufwickelbar.

Zur Ausführung der gekrümmten Bahnbewegung ist ein um eine Schwenkachse 2 verschwenkbarer Schwenkträger 1 vorgesehen, auf dem die Wickelkernträger 3, 4 mit den Filmwickelkernen 9, 10 angeordnet sind. Die während des Wickelvorganges durchlaufene gekrümmte Bahn 37 der beiden Wickelkernträger 3, 4 wird durch einen Kreisbogenabschnitt gebildet. Das erfindungsgemäße Verfahren läßt sich aber auch mit einer von der Kreisbahn abweichenden Bahnbewegung verwirklichen.

Die Schwenkachse 2 des Schwenkträgers 1 verläuft parallel zu den Wickelkernträgern 3, 4 der Filmwickelkerne 9, 10 und deren Abstand zu den Wickelkernträgern 3, 4 ist größer als der Radius einer voll aufgewickelten Filmspule.

Die Schwenkachse 2 liegt in der Mittelebene zwischen den Wickelkernträgern 3, 4 der Filmwickelkerne 9, 10 und ist im Bereich zwischen den Filmtransportrollen 40 angeordnet.

Über den schwenkbaren Schwenkträger 1 wird der Abstand zwischen den Wickelkernträgern 3, 4 während des Wickelvorganges konstant gehalten.

Der Schwenkträger 1 weist dazu zwei V-förmig von der Schwenkachse 2 sich wegerstreckende, vorzugsweise gleich lange Arme 30, 31 auf, die an ihren Enden die drehbaren Wickelkernträger 3, 4 tragen, wobei die Enden der Arme 30, 31 über einen Verbindungssteg 32 verbunden sind.

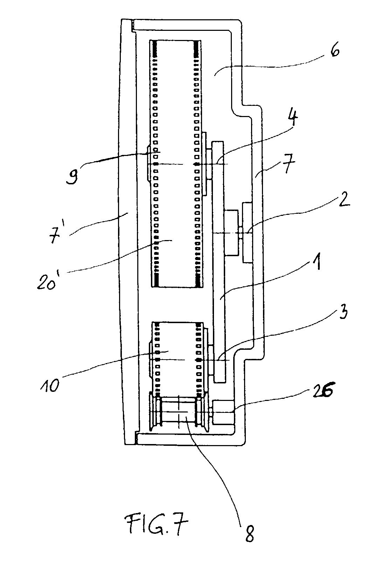

Die Lagerung der Wickelkernträger 3, 4 erfolgt jeweils an einem ihrer Enden auf dem Schwenkträger 1, wobei die Schwenkachse 2 sich in entgegengesetzter Richtung zu den Wickelkernträgern 3, 4 vom Schwenkträger 1 wegerstreckt (Fig.7).

Die Schwenkbewegung selbst wird über eine Vorrichtung 5 zur Erzeugung der Schwenkbewegung des Schwenkträgers 1 ausgeführt, die in mechanisch verschiedenster Art realisiert sein kann.

Im Ausführungsbeispiel der Fig.5, 6 und 7 wird die Schwenkbewegung unter anderem mit Hilfe einer Schraubenfeder 5 erzeugt, die mit ihrem einen Ende am Gehäuse 7 und mit ihrem anderen Ende an dem Trägerarm 31 angebracht ist und so die durch Abrollbewegung einer Filmspule entstehende Schwenkbewegung kontrolliert. Die Schwenkbewegung kann aber auch durch Motorkraft oder allein durch das Eigengewicht der Filmspule hervorgerufen werden, etwa wenn die Kassette in eine vertikale Lage gebracht wird.

Fig.5 zeigt den Zustand des vollkommen leeren Filmwickelkerns 10, in dem die Schraubenfeder 5 zur Gänze in sich zusammengezogen und die Filmspule 20' noch unbelichtet ist. Der Schwenkträger 1 vollzieht von seiner Ausgangsposition in Fig.5 ausgehend die Schwenkbewegung entlang der kreisbogenförmigen Bahn 37, während der der Filmwickelkern 10 nummehr mit Film bewickelt wird.

Da das auf den Wickelkern 10 aufzuwickelnde Filmmaterial eine stetige Vergrößerung des auf dem Wickelkern 10 befindlichen Filmmaterials 20 bewirkt, wird der Schwenkträger 1 gegen die Federkraft der Feder 5 entlang der Bahnlinie 37 in Richtung des abzuwickelnden Wickelkerns 9 bewegt und dabei die Feder 5 gespannt. Zugleich vergrößert sich im Bereich des Wickelkerns 10 der zur Verfügung stehende Raum, der aufgrund der Schwenkbewegung des Schwenkträgers 1 frei wird und für die Vergrößerung der Filmspule 20 genutzt wird, während der sich abwicklende Wickelkern 9 bei Verkleinerung der Filmspule 20' immer näher zur Gehäusewand 7 geschwenkt wird.

Zur Distanzierung der auf dem Filmwickelkern 10 aufgewickelten Filmspule 20 von der Kassettenwand 7 ist eine ortsfest gelagerte Abrollwalze 8 innerhalb des Gehäuses 6 vorgesehen, deren Drehachse 26 parallel zu den Wickelkernträgern 3, 4 der Filmwickelkerne 9, 10 angeordnet ist. Die Abrollwalze 8 steht mit der Filmspule 20 des gegenüberliegenden Filmwickelkerns 10 in Rollkontakt. Damit wird eine sichere Beabstandung der Filmspule 20 bzw. 20' von der Gehäusewand 7 erreicht.

Die gedachte Verlängerung der Schwenkbewegungskreisbahn 37 der Filmwickelkerne 9, 10 verläuft dabei ungefähr durch die Drehachse 26 der Abrollwalze 8. Damit verbleibt während des Wickelvorganges die Abrollstelle auf der Abrollwalze 8 immer an derselben Stelle.

Die Schraubenfeder 5 drückt den auf dem Filmwickelkern aufgewickelten Film zwar gegen die Abrollwalze 8, diese weist aber an ihren Enden je einen Bereich mit größerem Durchmesser und zwischen den Endbereichen einen mittleren Bereich mit kleinerem Durchmesser auf, wobei der mittlere Bereich sich über die effektive Filmbreite ohne Perforation erstreckt, wie aus Fig. 7 zu ersehen ist.Die Auflagestellen der Abrollwalze 8 sind nur im Bereich der Filmperforation vorhanden, sodaß die Bildinformation auf dem mittleren Filmteil ohne in Berührung mit der Abrollwalze 8 zu kommen, an dieser vorbeibewegt werden kann.

Zur besseren Führung des Filmes sind die Enden der Abrollwalze 8 jeweils kegelstumpfartig erweitert.

In Fig.6 ist der Filmwickelkern 10 mit der in völlig aufgewickeltem Zustand befindlichen Filmspule 20 dargestellt, in dem die Feder 5 gestreckt ist und daher eine rücktreibende Kraft in Richtung zum Anbringungspunkt der Feder 5 bewirkt, die einen sicheren Anpreßdruck gegen die Abrollwalze 8 zur Folge hat, womit die Schwenkbewegung des Schwenkträgers 1 in jeder Lage kontrolliert vor sich geht.

In der Darstellung gemäß Fig.7 ist die erfindungsgemäße Filmkassette mit einem Deckel 7' verschlossen.

Die Anbringung der Feder 5 und der Abrollwalze 8 kann genauso auf der gegenüberliegenden Seite erfolgen, sodaß dann der Filmwickelkern 9 mit seiner Filmspule 20' eine Abrollbewegung durchführt.

Der mit der erfindungsgemäßen Kassette umgebene Raum läßt sich anhand Fig. 6 dadurch ermessen, daß die Länge des Gehäuses 6 ungefähr dem Durchmesser einer voll aufgewickelten Filmspule 20 vermehrt um den Durchmesser des Filmwickelkerns 9 und die Breite des Gehäuses 6 ungefähr dem Durchmesser der voll aufgewickelten Filmspule 20 cntspricht. Demgegenüber hat dic Displacement-Kassette 6" eine ungefähr um einen halben Filmwickelkerndurchmesser längere Länge.

## Patentansprüche

1. Verfahren zum Abwickeln eines Informationsträgers, insbesondere eines Filmes, von einem Wickelkern und zum Aufwickeln desselben Informationsträgers auf den jeweils anderen Wickelkern innerhalb des Gehäuses einer Kassette, z.B. einer Filmkassette, wobei die Wickelkerne auf parallelen, drehbar gelagerten Wickelkernträgern gehalten sind, **dadurch gekennzeichnet,** daß die um ihre Achsen rotierenden Wickelkernträger (3, 4) der beiden Wickelkerne (9, 10) während des Wickelvorganges relativ zum Gehäuse (6) entlang einer vorbestimmbaren, gekrümmten Bahn (37) jeweils in Richtung zum abzuwickelnden Wickelkern (9, 10) bewegt werden.

2. Verfahren nach Anspruch 1, **dadurch gekennzeichnet,** daß der Abstand zwischen den Wickelkernträgern (9, 10) während des Wickelvorganges konstant gehalten wird.

3. Verfahren nach Anspruch 1 oder 2, **dadurch gekennzeichnet,** daß die während des Wickelvorganges durchlaufene, gekrümmte Bahn (37) der beiden Wickelkernträger (3, 4) durch einen Kreisbogenabschnitt gebildet wird, der in einer Ebene normal zu den Drehachsen der beiden Wickelkernträger (3, 4) verläuft.

4. Filmkassette mit zwei in einem Gehäuse drehbar gelagerten Wickelkernträgern zur Halterung von vorzugsweise aufsteckbaren Filmwickelkernen, die in einem festen Abstand voneinander angeordnet sind und über die der Film jeweils von einem der Filmwickelkerne abwickelbar und auf den jeweils anderen aufwickelbar ist, **dadurch gekennzeichnet,** daß ein um eine Schwenkachse (2) verschwenkbarer Schwenkträger (1) vorgesehen ist, auf dem die drehbaren Wickelkernträger (3, 4) angeordnet sind.

5. Filmkassette nach Anspruch 4, **dadurch gekennzeichnet,** daß die Schwenkachse (2) des Schwenkträgers (1) parallel zu den Drehachsen der Wickelkernträger (3, 4) verläuft.

6. Filmkassette nach Anspruch 4 oder 5, dadurch **gekennzeichnet,** daß der Abstand der Schwenkachse (2) zu den Wickelkernträgern (3, 4) größer als der Radius einer voll aufgewickelten Filmspule ist.

7. Filmkassette nach Anspruch 4, 5 oder 6, **dadurch gekennzeichnet,** daß die Schwenkachse (2) in der Mittelebene zwischen den drehbaren Wickelkernträgern (3, 4) liegt.

8. Filmkassette nach einem der Ansprüche 4 bis 7, **dadurch gekennzeichnet,** daß der Schwenkträger (1) zwei V-förmig von der Schwenkachse (2) sich wegerstreckende, vorzugsweise gleich lange Arme (30, 31) umfaßt, an deren Enden die drehbaren Wickelkernträger (3, 4) angeordnet sind, wobei die Enden der Arme (30, 31) über einen Verbindungssteg (32) verbunden sind.

9. Filmkassette nach einem der Ansprüche 4 bis 8,**dadurch gekennzeichnet,** daß eine Vorrichtung (5) zur Erzeugung der Schwenkbewegung des Schwenkträgers (1) vorgesehen ist.

10. Filmkassette nach Anspruch 9, **dadurch gekennzeichnet,** daß die Vorrichtung zur Erzeugung der Schwenkbewegung eine Schraubenfeder (5) umfaßt, die mit ihrem einen Ende an dem Gehäuse (7) und mit ihrem anderen Ende an einem der Trägerarme (31) angebracht ist.

11. Filmkassette nach Anspruch 10, **dadurch gekennzeichnet,** daß zur Distanzierung der Filmspule eine ortsfest gelagerte Abrollwalze (8) innerhalb des Gehäuses (6) vorgesehen ist, deren Drehachse (26) parallel zu den Drehachsen der Wickelkernträger (3, 4) angeordnet ist, wobei die Abrollwalze (8) mit dem sich auf dem gegenüberliegenden Filmwickelkern (10) auf- oder abwickelnden Film in Rollkontakt bringbar ist.

12. Filmkassette nach Anspruch 11, **dadurch gekennzeichnet,** daß die gedachte Verlängerung der Schwenkbewegungskreisbahn (37) der Wickelkernträger (3, 4) durch die Drehachse (26) der Abrollwalze (8) verläuft.

13. Filmkassette nach Anspruch 10 oder 11, **dadurch gekennzeichnet,** daß die Abrollwalze (8) an ihren Enden je einen Bereich mit größerem Durchmesser und zwischen den Endbereichen einen mittleren Bereich mit kleinerem Durchmesser aufweist, wobei der mittlere Bereich sich über die effektive Filmbreite ohne Perforation erstreckt.

14. Filmkassette nach Anspruch 13, **dadurch gekennzeichnet,** daß die Enden der Abrollwalze (8) jeweils kegelstumpfartig erweitert sind.

15. Filmkassette nach einem der Ansprüche 4 bis 14, **dadurch gekennzeichnet,** daß die Länge des Gechäuses (6) ungefähr dem Durchmesser einer voll aufgewickelten Filmspule vermehrt um den Durchmesser eines Filmwickelkerns (9) und die Breite des Gehäuses (6) ungefähr dem Durchmesser der voll aufgewickelten Filmspule entspricht.

16. Filmkassette nach einem der Ansprüche 4 bis 15, **dadurch gekennzeichnet,** daß die Schwenkachse (2) des Schwenkträgers (1) im Bereich zwischen den Filmtransportrollen (40) angeordnet ist.

17. Filmkassette nach einem der Ansprüche 4 bis 16, **dadurch gekennzeichnet,** daß die Wickelkernträger (3, 4) an jeweils einem ihrer Enden auf dem Schwenkträger (1) gelagert sind, und daß die Schwenkachse (2) sich in entgegengesetzter Richtung zu den Wickelkernträgern (3, 4) vom Schwenkträger (1) wegerstreckt.
